# EUROPÄISCHE PATENTSCHRIFT

(11) **EP 1 834 002 B1**
(45) Veröffentlichungstag und Bekanntmachung des Hinweises auf die Patenterteilung: **14.04.2010**
(21) Anmeldenummer: 05821900.7
(22) Anmeldetag: 23.12.2005
(51) Int. Cl.: C22B 15/00, C22B 3/08

(54) **VERWENDUNG VON TENSIDEN BEI DER METALLGEWINNUNG**
USE OF SURFACTANTS IN THE PRODUCTION OF METAL
UTILISATION DE TENSIOACTIFS POUR LA PRODUCTION DE METAUX

(30) Priorität: 24.12.2004 DE 102004063500
(43) Veröffentlichungstag der Anmeldung: 19.09.2007
(73) Patentinhaber: BASF SE, 67056 Ludwigshafen (DE)
(72) Erfinder: SEELMANN-EGGEBERT, Hans-Peter, 67117 Limburgerhof (DE); PINOCHET, Ricardo Daniel Lopez, La Reina, Santiago (CL); BRODERSEN, Carlos René Ponce, Colina, Santiago (CL); OETTER, Günter, 67227 Frankenthal (DE); BERASTAIN, Arturo, Lima (PE)
(86) Internationale Anmeldenummer: PCT/EP2005/014004
(87) Internationale Veröffentlichungsnummer: WO 2006/069760

(56) Entgegenhaltungen:
- EP-A- 0 536 914
- WO-A-92/17614
- DE-A1- 10 243 365
- GB-A- 1 567 765
- US-A- 4 080 419
- ED. BY FATHI HABASHI: "Handbook of Extractive Metallurgy" 1997, WILEY-VCH , GERMANY , XP002375391 Seite 525 - Seite 529
- ULLMANN'S ENCYCLOPEDIA OF INDUSTRIAL CHEMISTRY: "Interfacial phenomena" [Online] 15. Juni 2000 (2000-06-15), WILEY- VCH , GERMANY , XP002375392 Gefunden im Internet: URL:www.mrw.interscience.wiley.com/ueic/ar ticles/a25_747/sect1.html> [gefunden am 2006-03-31] das ganze Dokument
- ULLMANN'S ENCYCLOPEDIA OF INDUSTRIAL CHEMISTRY: "Overview of Surfactants" [Online] 15. Juni 2000 (2000-06-15), WILEY- VCH , GERMANY , XP002375393 Gefunden im Internet: URL:www.mrw.interscience.wiley.com/ueic/ar ticles/a25_747/sect2.html> [gefunden am 2006-03-31] das ganze Dokument
- ULLMANN'S ENCYCLOPEDIA OF INDUSTRIAL CHEMISTRY: "Anionoc Surfactants" 15. Juni 2000 (2000-06-15), WILEY- VCH , GERMANY , XP002375394 Gefunden im Internet: URL:www.mrw.interscience.wiley.com/ueic/ar ticles/a25_747/sect6.html> [gefunden am 2006-03-31] das ganze Dokument
- ULLMANN'S ENCYCLOPEDIA OF INDUSTRIAL CHEMISTRY: "Nonionic Surfactants" [Online] 15. Juni 2000 (2000-06-15), WILEY- VCH , GERMANY , XP002375395 Gefunden im Internet: URL:www.mrw.interscience.wiley.com/ueic/ar ticles/a25_747/sect7.html> [gefunden am 2006-03-31] das ganze Dokument
- ULLMANN'S ENCYCLOPEDIA OF INDUSTRIAL CHEMISTRY: "Cationic Surfactants" [Online] 15. Juni 2000 (2000-06-15), WILEY- VCH , GERMANY , XP002375396 Gefunden im Internet: URL:www.mrw.interscience.wiley.com/ueic/ar ticles/a25_747/sect8.html> [gefunden am 2006-03-31] das ganze Dokument
- ULLMANN'S ENCYCLOPEDIA OF INDUSTRIAL CHEMISTRY: "Amphoteric Surfactants" [Online] 15. Juni 2000 (2000-06-15), WILEY- VCH , GERMANY , XP002375397 Gefunden im Internet: URL:www.mrw.interscience.wiley.com/ueic/ar ticles/a25_747/sect9.html> [gefunden am 2006-03-31] das ganze Dokument
- ULLMANN'S ENCYCLOPEDIA OF INDUSTRIAL CHEMISTRY: "Surfaxtants with Heteroatoms in the Hydrophobic Group" [Online] 15. Juni 2000 (2000-06-15), WILEY- VCH , GERMANY , XP002375398 Gefunden im Internet: URL:www.mrw.interscience.wiley.com/ueic/ar ticles/a25_747/sect10.html> [gefunden am 2006-03-31] das ganze Dokument

## Beschreibung

Die vorliegende Erfindung betrifft ein Verfahren zur Gewinnung von Metallen aus metallhaltigen Materialien mit Hilfe einer wässrigen schwefelsäurehaltigen Zusammensetzung, welche mindestens ein Tensid enthält.

Die vorliegende Erfindung eignet sich beispielsweise zur Gewinnung von Kupfer.

Kupfer (Cu) findet sich als edles Metall in kleineren Mengen gediegen in Nordamerika, Chile und Australien. In gebundenem Zustande kommt es entsprechend seinem metallischen Charakter nur kationisch in Form von Oxiden, Sulfiden, Arseniden, Chloriden und Carbonaten vor. Die wichtigsten sulfidischen Kupfererze sind: *Kupferkies (Chalkopyrit)* CuFeS₂ (= "Cu₂S · Fe₂S₃"), *Buntkupfererz (Bornit)* Cu₃FeS₃ (= "3Cu₂S · Fe₂S₃"), *Cubanit* CuFe₂S₃ und *Kupferglanz (Chalkosin)* Cu₂S. Unter den oxidischen Erzen sind das rote *Rotkupfererz (Cuprit)* Cu₂O, der grüne *Malachit* Cu₂(OH)₂(CO₃) (= "CUCO₃ · Cu(OH)₂") und die blaue *Kupferlasur (Azurit)* Cu₃(OH)₂(CO₃)₂ (= "2CuCO₃ · Cu(OH)₂") zu nennen. Besonders reiche Lager von Kupfererzen finden sich in den USA, in Kanada, im asiatischen Russland, in Chile, im Kongogebiet und in Simbabwe.

Aus kupferreichen Ausgangsmaterialien werden die Kupfererträge vorzugsweise durch Flotation gewonnen. Demgegenüber eignet sich die Flotation nicht für Ausgangsmaterialien mit geringen Kupferanteilen.

Aus kupferarmen Erzen und Abfallprodukten (Cu-Gehalt < 2 %), z. B. den bei der Schwefelsäurefabrikation anfallenden kupferhaltigen Pyritabbränden, wird das Rohkupfer zweckmäßig nach einem nassen Verfahren gewonnen, indem man diese Ausgangsmaterialien - nötigenfalls nach vorherigem Rösten - mit verdünnter Schwefelsäure behandelt und aus der so erhaltenen Kupfersulfatlösung das Kupfer durch weitere Aufarbeitungsschritte gewinnt.

Üblicherweise erfolgt die Extraktion des Kupfer so, dass das kupferhaltige Material aufgeschüttet und dann mit verdünnten Schwefelsäure von oben besprüht wird, so dass die verdünnte Schwefelsäure durch das kupferhaltige Material durchperkolieren oder durchrieseln kann. Die mit Kupfer angereicherte Mutterlauge sammelt sich am Boden des Haufens an und wird der weiteren Aufarbeitung zugeführt.

Die Aufarbeitung der so erhaltenen wässrigen kupferhaltigen Mutterlauge erfolgt im Allgemeinen durch Extraktion des Kupfers aus der wässrigen Lösung in eine organische Lösung mit anschließender erneuter Extraktion durch Schwefelsäure und elektrolytischer Abscheidung.

Die Ausbeuten bei diesem Verfahren zur Gewinnung von Kupfer sind - unabhängig von dem üblicherweise niedrigen Kupfergehalt in den Ausgangsmaterialien - im Allgemeinen niedrig. Zur Erhöhung der Ausbeute bei der Kupfergewinnung wird im Stand der Technik der Zusatz von Tensiden zu der verdünnten Schwefelsäure beschrieben.

US 4,045,084 beschreibt ein Verfahren zur in-situ-Gewinnung von Kupfer und Nickel ausgehend von unterirdischen sulfidhaltigen Erzen, wobei eine zweiphasige Lauge aus einer wässrigen Phase und einer gasförmigen Phase verwendet wird. Die gasförmige Phase der Lauge wird von Sauerstoff-haltigen Bläschen gebildet, während die wässrige Phase neben Ammoniak und Diammoniumsulfat zusätzlich ein Tensid enthält. Durch die Verwendung des Tensids in der zweiphasigen Lauge soll gewährleistet werden, dass die Sauerstoff-haltigen Bläschen unter den Bedingungen der Extraktion stabil bleiben und gleichzeitig die Koaleszenz der Sauerstoff-haltigen Bläschen minimiert wird. Als bevorzugtes Tensid wird beispielsweise Dowfax^{®} 2A1 genannt, wobei es sich um ein anionisches Sulfonattensid handelt.

EP 0 536 914 beschreibt die Verwendung von fluoraliphatischen Tensiden der allgemeinen Formel (Rf)ₙ(Q)ₓZ, in der Rf einem fluoraliphatischen Rest, Q einer Verknüpfungseinheit und Z einer wasserlöslichen Gruppe entspricht, bei der extraktiven Gewinnung von Kupfer (n gleich 1 oder 2 und x ist gleich 0 oder 1). Darüber hinaus wird in der EP-Schrift beschrieben, dass sich außer den fluoraliphatischen Tensiden keine weiteren Tenside zur Kupferextraktion eignen, da andere kohlenwasserstoffhaltige Tenside entweder keine ausreichende Wirkung zeigen würden oder aber unter den sauren Bedingungen der Extraktion instabil seien.

Nachteilig an diesen bekannten Verfahren sind jedoch die großen Mengen an Schwefelsäure, welche zur Abtrennung des Kupfers aus den kupferhaltigen Materialien benötigt werden, sowie die im Allgemeinen unbefriedigende Ausbeute an Kupfer während der Extraktion, welche üblicherweise maximal 80 % beträgt. Ferner erfordert die Extraktion einen erheblichen Zeitaufwand zwischen einigen Tagen bis zu einigen Monaten.

Damit besteht die Aufgabe, ein Verfahren zur Extraktion von Metallen aus entsprechenden metallhaltigen Materialien aufzufinden, welche es vorzugsweise ermöglichen, die Ausbeuten an Metall, bezogen auf das verwendete metallhaltige Material, zu erhöhen. Darüber hinaus sollte das Verfahren dazu führen, die erforderliche Extraktionsdauer sowie die zur Extraktion erforderliche Menge an Schwefelsäure vorzugsweise zu erniedrigen. Darüber hinaus sollte die Zusammensetzung vorzugsweise keine Stoffe umfassen, welche die Aufarbeitung des metallhaltigen Extrakts stören können.

Gelöst wird die Aufgabe durch ein Verfahren gemäß Anspruch 1.

Eine bevorzugte Zusammensetzung ist dann dadurch gekennzeichnet, dass das Tensid zu einer Erniedrigung des Kontaktwinkels auf Glas nach 1 Sekunde, besonders bevorzugt nach 0,5 Sekunden, insbesondere nach 0,1 Sekunden, um mindestens 20 °, insbesondere mindestens 30 °, speziell mindestens 40 °, führt.

Erfindungsgemäß wurde gefunden, dass die beschriebenen Tensidsysteme in sehr niedrigen Einsatzkonzentrationen die Kinetik der Extraktion begünstigen, die Metallausbeute erhöhen und es ermöglichen, die Einsatzmenge der Schwefelsäure zu senken.

Die erfindungsgemäß zu verwendende Zusammensetzung eignet sich zur Extraktion von jedem Metall, das sich unter Behandlung mit Schwefelsäure aus den entsprechenden Ausgangsmaterialien, beispielsweise Erzen, Gestein oder Mineralien, lösen lässt. Beispiele hierfür sind die Buntmetalle Kupfer, Nickel, Blei, Zink, Kobalt, Antimon, Quecksilber und Bismut, insbesondere Kupfer.

In einer bevorzugten Ausführungsform der vorliegenden Erfindung weist die resultierende wässrige Zusammensetzung mit dem Tensid einen Kontaktwinkel auf Glas von kleiner 40 °, besonders bevorzugt kleiner 30 °, insbesondere kleiner 20 °, auf.

Der Kontaktwinkel wird dabei auf einem extra-weißen Glasträger der Firma Gerhard Menzel Glasbearbeitungswerk GmbH & Co. KG, Braunschweig mit einer Objektträgerdicke von 1 mm gemessen. Die ungefähre Zusammensetzung des Glasobjektträgers ist dabei wie folgt:

### Ungefähre chemische Zusammensetzung:

| | | |
|---|---|---|
| Siliziumdioxid | SiO₂ | 72.20 % |
| Natriumoxid | Na₂O | 14.30% |
| Kaliumoxid | K₂O | 1.20 % |
| Calciumoxid | CaO | 6.40 % |
| Magnesiumoxid | MgO | 4.30 % |
| Aluminiumoxid | Al₂O₃ | 1.20 % |
| Eisenoxid | Fe₂O₃ | 0.03 % |
| Schwefeltrioxid | SO₃ | 0.30 % |

### Weitere Eigenschaften des Glases sind wie folgt:

| | |
|---|---|
| Mittlerer Expansions-Koeffizient | 90,6 x 10⁻⁷/C° |
| (20 - 300 °) | |
| Dehnungspunkt log n 14.5 | 513 °C |
| Erweichungs-Littleton Punkt | 720 °C |

### Abstrahlung zweite Spiegeloberfläche:

Totale Solarreflexion (M = 2) als Proportion der Normalreflexion einer zweiten Spiegeloberfläche bei Solar-Elevation von 30 °: 95.3 %

### Lichtdurchlässigkeit:

Totale Solardurchlässigkeit (M = 2) als Proportion der Normaldurchlässigkeit bei Solar-Elevation von 30 °; 91.6 %

### Lichtbrechungsindex

| | |
|---|---|
| Bei λ= 546.07 nm | 1.5171 |
| Dichtigkeit | 2.479 |

Der Glasträger wird vor der Messung des Kontaktwinkels mit Aceton gereinigt und im Trockenschrank bei 70 °C für 2 Stunden getrocknet.

Das in der erfindungsgemäß zu verwendenden Zusammensetzung verwendete Tensid kann anionisch, kationisch, nichtionisch oder amphoter sein. Auch Mischungen der zuvor genannten Tensidklassen können verwendet werden. Dabei sind solche Tenside bevorzugt, welche nach einer Extraktion des Metalls aus dem metallhaltigen Material die weitere Aufarbeitung des extrahierten Metalls in der schwefelsauren Kupferlösung, insbesondere deren Überführung aus der wässrigen Extraktionsphase in eine organische Phase, nicht stören. Geeignete Tensidsysteme müssen deshalb gute Netzmittel, aber schlechte Emulgatoren sein. In einer bevorzugten Ausführungsform der vorliegenden Erfindung wird daher ein Tensid verwendet, welches während der Extraktion der wässrigen Phase mit einer organischen Phase im Vergleich zu einer Phasentrennung ohne Tensid die Zeit bis zur Einstellung der Phasentrennung im Wesentlichen nicht verlängert.

Geeignete Tenside sollten darüber hinaus unter den sauren Bedingungen der Schwefelsäure in einer wässrigen Phase vorzugsweise stabil sein und vorzugsweise biologisch abbaubar, besonders bevorzugt leicht biologisch abbaubar, sein.

Ferner kann es sich um ein Gemisch aus 5 bis 95 Gew.-% mindestens eines verzweigten Alkoholalkoxylats (II), wie es unmittelbar vorstehend beschrieben ist, und 5 bis 95 Gew.-% eines entsprechenden Alkoholalkoxylats, in dem anstelle eines verzweigten Alkylrestes jedoch ein unverzweigter Alkylrest vorliegt.

In den Alkoholalkoxylaten der allgemeinen Formel (I) ist R² vorzugsweise Propyl, insbesondere n-Propyl.

Vorzugsweise weist in den Alkoholalkoxylaten der allgemeinen Formel (I) n einen mittleren Wert von 4 bis 15, besonders bevorzugt 6 bis 12, insbesondere 7 bis 10 auf.

Bevorzugt weist m einen mittleren Wert von 0,5 bis 4, besonders bevorzugt 0,5 bis 2, insbesondere 1 bis 2 auf. Der Ausdruck "mittlerer Wert" bezieht sich auf technische Produkte, in denen in den Einzelmolekülen unterschiedliche Anzahlen an Alkylenoxideinheiten vorliegen können. Er beschreibt den in technischen Produkten im Mittel vorliegenden Anteil der entsprechenden Alkylenoxid-Einheiten. Ein Wert von 0,5 bedeutet daher, dass im Mittel jedes zweite Molekül eine entsprechende Einheit trägt. Anstelle der Untergrenze von 0,5 tritt gemäß einer bevorzugten Ausführungsform der Erfindung für die Indizes n, m, p, q die Untergrenze 1.

r ist vorzugsweise 0. s ist vorzugsweise 0.

Der Rest R¹ ist vorzugsweise ein C₈₋₅-, besonders bevorzugt C₈₋₁₃-, insbesondere C₈₋₁₂-Alkylrest, der mindestens einfach verzweigt ist. Es können auch mehrere Verzweigungen vorliegen.
R⁵ ist vorzugsweise Methyl oder Ethyl, insbesondere Methyl.
R⁶ ist vorzugsweise Ethyl.

In den Gemischen liegen Verbindungen mit unverzweigten und mit verzweigten Alkoholresten R¹ vor. Dies ist beispielsweise der Fall bei Oxoalkoholen, die einen Anteil an linearen und einen Anteil an verzweigten Alkoholketten aufweisen. Beispielsweise weist ein C_{13/15}-Oxoalkohol häufig etwa 60 Gew.-% vollständig lineare Alkoholketten, daneben aber auch etwa 40 Gew.-% α-Methyl-verzweigte und C_{≥2}-verzweigte Alkoholketten auf.

In den Alkoholalkoxylaten der allgemeinen Formel (II) ist R³ vorzugsweise ein verzweigter oder unverzweigter C₈₋₁₅-Alkylrest, besonders bevorzugt ein verzweigter oder unverzweigter C₈₋₁₃-Alkylrest und insbesondere ein verzweigter oder unverzweigter C₈₋₁₂-Alkylrest. R⁴ ist vorzugsweise Propyl, insbesondere n-Propyl, p weist vorzugsweise einen mittleren Wert von 4 bis 15, besonders bevorzugt einen mittleren Wert von 6 bis 12 und insbesondere einen mittleren Wert von 7 bis 10 auf. q weist vorzugsweise einen mittleren Wert von 0,5 bis 4, besonders bevorzugt 0,5 bis 2, insbesondere 1 bis 2 auf.

Entsprechend den Alkoholalkoxylaten der allgemeinen Formel (I) können auch die Alkoholalkoxylate der allgemeinen Formel (11) als Gemische mit unverzweigten und verzweigten Alkoholresten vorliegen.

Als den Alkoholalkoxylaten zugrunde liegende Alkoholkomponenten kommen nicht nur reine Alkanole in Betracht, sondern auch homologe Mischungen mit einem Bereich von Kohlenstoffatomen. Beispiele sind C_{8/10}-Alkanole, C_{10/2}-Alkanole, C_{13/15}-Alkanole, C_{12/15}-Alkanole. Auch Gemische mehrerer Alkanole sind möglich.

Die vorstehenden erfindungsgemäßen Alkanolalkoxylate oder Gemische werden vorzugsweise hergestellt durch Umsetzung von Alkoholen der allgemeinen Formel R¹-OH bzw. R³-OH oder Gemischen entsprechender verzweigter und unverzweigter Alkohole, gegebenenfalls zuerst mit C₃₋₆-Alkylenoxid, sodann mit Ethylenoxid und nachfolgend gegebenenfalls mit C₃₋₄₋Alkylenoxid und sodann mit einem entsprechenden C₅₋₆-Alkylenoxid. Die Alkoxylierungen werden dabei vorzugsweise in Gegenwart von Alkoxylierungskatalysatoren durchgeführt. Dabei werden insbesondere basische Katalysatoren wie Kaliumhydroxid eingesetzt. Durch spezielle Alkoxylierungskatalysatoren wie modifizierte Bentonite oder Hydrotalcite, wie sie beispielsweise in WO 95/04024 beschrieben sind, kann die statistische Verteilung der Mengen der eingebauten Alkylenoxide stark eingeengt werden, so dass man "Narrow-Range"-Alkoxylate erhält.

In der allgemeinen Formel (III) bedeutet p vorzugsweise 0 bis 5, insbesondere 0 bis 3. Sofern Blöcke (B)ₚ vorliegen, ist p vorzugsweise eine Zahl von 0,1 bis 10, besonders bevorzugt 0,5 bis 5, insbesondere 1 bis 3.

In der allgemeinen Formel (III) bedeutet n vorzugsweise eine Zahl im Bereich von 0,25 bis 10, insbesondere von 0,5 bis 7, m ist vorzugsweise eine Zahl im Bereich von 2 bis 10, insbesondere 3 bis 6. B ist vorzugsweise Propylenoxy und/oder Butylenoxy, speziell Propylenoxy an beiden Positionen.

q ist vorzugsweise eine Zahl im Bereich von 1 bis 5, besonders bevorzugt im Bereich von 2 bis 3.

Die Summe p + n + m + q ist mindestens 1, vorzugsweise 3 bis 25, besonders bevorzugt 5 bis 15, insbesondere 7 bis 13.

In den Alkoxylaten liegen vorzugsweise 3 oder 4 Alkylenoxidblöcke vor. Gemäß einer Ausführungsform liegen an den Alkoholrest anschließend zunächst Ethylenoxy-Einheiten, daran anschließend Propylenoxid-Einheiten und daran anschließend Ethylenoxy-Einheiten vor. Gemäß einer weiteren Auführungsform liegen an den Alkoholrest anschließend zunächst Propylenoxy-Einheiten, so dann Ethylenoxy-Einheiten, so dann Propylenoxy-Einheiten und abschließend Ethylenoxy-Einheiten vor. Anstelle der Propylenoxy-Einheiten können auch die anderen angegebenen Alkylenoxy-Einheiten vorliegen.

p, n, m und q bezeichnen dabei einen mittleren Wert, der sich als Durchschnitt für die Alkoxylate ergibt. Daher können p, n, m, q auch von ganzzahligen Werten abweichen. Bei der Alkoxylierung von Alkanolen wird im Allgemeinen eine Verteilung des Alkoxylierungsgrades erhalten, die in gewissem Umfang durch Einsatz unterschiedlicher Alkoxylierungskatalysatoren eingestellt werden kann. Durch die Auswahl geeigneter Mengen der Gruppen A und B kann das Eigenschaftsspektrum der erfindungsgemäßen Alkoxylat-Gemische je nach praktischen Erfordernissen angepasst werden.

Die Alkoxylat-Gemische werden durch Alkoxylierung der zugrunde liegenden Alkohole C₅H₁₁CH(C₃H₇)CH₂OH erhalten. Die Ausgangsalkohole können aus den einzelnen Komponenten gemischt werden, so dass sich das erfindungsgemäße Verhältnis ergibt. Sie können durch Aldolkondensation von Valeraldehyd und nachfolgende Hydrierung hergestellt werden. Die Herstellung von Valeraldehyd und den entsprechenden Isomeren erfolgt durch Hydroformylierung von Buten, wie beispielsweise in US 4,287,370; Beilstein E IV 1, 32 68, Ullmanns Encyclopedia of Industrial Chemistry, 5. Auflage, Band A1, Seiten 323 und 328 f beschrieben. Die nachfolgende Aldolkondensation ist beispielsweise beschrieben in US 5,434,313 und Römpp, Chemie Lexikon, 9. Auflage, Stichwort "Aldol-Addition" Seite 91. Die Hydrierung des Aldolkondensationsproduktes folgt allgemeinen Hydrierbedingungen.

Des Weiteren kann 2-Propylheptanol durch Kondensation von 1-Pentanol (als Mischung der entsprechenden Methylbutanole-1) in Gegenwart von KOH bei erhöhten Temperaturen hergestellt werden, siehe z.B. Marcel Guerbet, C.R. Acad Sci Paris 128, 511, 1002 (1899). Des Weiteren ist auf Römpp, Chemie Lexikon, 9. Auflage, Georg Thieme Verlag Stuttgart, und die dort genannten Zitate sowie Tetrahedron, Vol. 23, Seiten 1723 bis 1733, hinzuweisen.

In der allgemeinen Formel (III) kann der Rest C₅H₁₁ die Bedeutung n-C₅H₁₁, C₂H₅CH(CH₃)CH₂ oder CH₃CH(CH₃)CH₂CH₂ haben. Es handelt sich bei den Alkoxylaten um Gemische, wobei
70 bis 99 Gew.-%, vorzugsweise 85 bis 96 Gew.-% Alkoxylate A1 vorliegen, in denen C₅H₁₁ die Bedeutung n-C₅H₁₁ hat, und
1 bis 30 Gew.%, vorzugsweise 4 bis 15 Gew.-% Alkoxylate A2, in denen C₅H" die Bedeutung C₂H₅CH(CH₃)CH₂ und/oder CH₃CH(CH₃)CH₂CH₂ hat.

Der Rest C₃H₇ hat vorzugsweise die Bedeutung n-C₃H₇.

Vorzugsweise wird die Alkoxylierung durch starke Basen katalysiert, die zweckmäßigerweise in Form eines Alkalialkoholats, Alkalihydroxids oder Erdalkalihydroxids, in der Regel in einer Menge von 0,1 bis 1 Gew.-% bezogen auf die Menge des Alkanols R²-OH, zugesetzt werden, (vergl. G. Gee et al., J. Chem. Soc. (1961), S. 1345; B. Wojtech, Makromol. Chem. 66, (1966), S. 180).

Auch eine saure Katalyse der Additionsreaktion ist möglich. Neben Bronstedsäuren eignen sich auch Lewissäuren wie zum Beispiel AlCl₃ oder BF₃-Dietherat, BF₃, BF₃ · H₃PO₄, SbCl_{4 ·} 2 H₂O, Hydrotalcit (Vgl. P.H. Plesch, The Chemistry of Cationic Polymerization, Pergamon Press, New York (1963). Geeignet als Katalysator sind auch Doppelmetallcyanid (DMC) Verbindungen.

Als DMC-Verbindung können prinzipiell alle dem Fachmann bekannten geeigneten Verbindungen verwendet werden.

Als Katalysator geeignete DMC-Verbindungen sind beispielsweise in der WO 99/16775 und der DE-A-101 17 273 beschrieben. Insbesondere sind für die Alkoxylierung Doppelmetallcyanid-Verbindung der allgemeinen Formel (IV) als Katalysator geeignet:

M¹ₐ[M²(CN)_{b}(A)_{c}]_{d} fM¹_{g}Xₙ h(H₂O) eL kP (IV),

in der
- M¹ mindestens ein Metallion, ausgewählt aus der Gruppe bestehend aus Zn²⁺, Fe²⁺, Fe³⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺ Sr²⁺, W⁴⁺, W⁶⁺,Cr²⁺, Cr³⁺,Cd²⁺, Hg²⁺, Pd²⁺, Pt²⁺, V²⁺, Mg²⁺, Ca²⁺, Ba²⁺,Cu²⁺, La³⁺, Ce³⁺, Ce⁴⁺, Eu³⁺, Ti³⁺, Ti⁴⁺, Ag⁺, Rh²⁺, Rh³⁺, Ru²⁺, Ru³⁺ ist,
- M² mindestens ein Metallion, ausgewählt aus der Gruppe bestehend aus Fe²⁺, Fe³⁺, Co²⁺, Co³⁺, Mn²⁺, Mn³⁺, V⁴⁺,V⁵⁺, Cr²⁺, Cr³⁺, Rh³⁺, Ru²⁺, Ir³⁺ ist,
- A und X unabhängig voneinander ein Anion, ausgewählt aus der Gruppe, bestehend aus Halogenid, Hydroxid, Sulfat, Carbonat, Cyanid, Thiocyanat, Isocyanat, Cyanat, Carboxylat, Oxalat, Nitrat, Nitrosyl, Hydrogensulfat, Phosphat, Dihydrogenphosphat, Hydrogenphosphat oder Hydrogencarbonat sind,
- L ein mit Wasser mischbarer Ligand ist, ausgewählt aus der Gruppe, bestehend aus Alkoholen, Aldehyden, Ketonen, Ethern, Polyethern, Estern, Polyestern, Polycarbonat, Harnstoffen, Amiden, primären, sekundären und tertiären Aminen, Liganden mit Pyridin-Stickstoff, Nitrilen, Sulfiden, Phosphiden, Phosphiten, Phosphanen, Phosphonaten und Phosphaten,
- k eine gebrochene oder ganze Zahl größer oder gleich Null ist, und
- P ein organischer Zusatzstoff ist,
- a, b, c, d, g und n so ausgewählt sind, dass die Elektroneutralität der Verbindung (I) gewährleistet ist, wobei c = 0 sein kann,
- e die Anzahl der Ligandenmoleküle eine gebrochene oder ganze Zahl größer 0 oder 0 ist,
- f und h unabhängig voneinander eine gebrochene oder ganze Zahl größer 0 oder 0 sind.

Als organische Zusatzstoffe P sind zu nennen: Polyether, Polyester, Polycarbonate, Polyalkylenglykolsorbitanester, Polyakylenglykolglycidylether, Polyacrylamid, Poly(acrylamid-co-acrylsäure), Polyacrylsäure, Poly(acrylamid-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose, Polyacetate, ionische oberflächen- und grenzflächenaktive Verbindungen, Gallensäure oder deren Salze, Ester oder Amide, Carbonsäureester mehrwertiger Alkohole und Glycoside.

Diese Katalysatoren können kristallin oder amorph sein. Für den Fall, dass k gleich null ist, sind kristalline Doppelmetallcyanid-Verbindungen bevorzugt. Im Fall, dass k größer null ist, sind sowohl kristalline, teilkristalline, als auch substantiell amorphe Katalysatoren bevorzugt.

Von den modifizierten Katalysatoren gibt es verschiedene bevorzugte Ausführungsformen. Eine bevorzugte Ausführungsform sind Katalysatoren der Formel (IV), bei denen k größer null ist. Der bevorzugte Katalysator enthält dann mindestens eine Doppelmetallcyanid-Verbindung, mindestens einen organischen Liganden und mindestens einen organischen Zusatzstoff P.

Bei einer anderen bevorzugten Ausführungsform ist k gleich null, optional ist e auch gleich null und X ist ausschließlich ein Carboxylat, bevorzugt Formiat, Acetat und Propionat. Derartige Katalysatoren sind in der WO 99/16775 beschrieben. Bei dieser Ausführungsform sind kristalline Doppelmetallcyanid-Katalysatoren bevorzugt. Ferner bevorzugt sind Doppelmetallcyanid-Katalysatoren, wie in der WO 00/74845 beschrieben, die kristallin und plättchenförmig sind.

Die Herstellung der modifizierten Katalysatoren erfolgt durch Vereinigung einer Metallsalz-Lösung mit einer Cyanometallat-Lösung, die optional sowohl einen organischen Liganden L als auch einen organischen Zusatzstoff P enthalten können. Anschließend werden der organische Ligand und optional der organische Zusatzstoff zugegeben. Bei einer bevorzugten Ausführungsform der Katalysatorherstellung wird zunächst eine inaktive Doppelmetallcyanid-Phase hergestellt und diese anschließend durch Umkristallisation in eine aktive Doppelmetallcyanidphase überführt, wie in der PCT/EP01/01893 beschrieben.

Bei einer anderen bevorzugten Ausführungsform der Katalysatoren sind f, e und k ungleich Null. Dabei handelt es sich um Doppelmetallcyanid-Katalysatoren, die einen mit Wasser mischbaren organischen Liganden (im Allgemeinen in Mengen von 0,5 bis 30 Gew.%) und einen organischen Zusatzstoff (im allgemeinen in Mengen von 5 bis 80 Gew.%) enthalten wie in der WO 98/06312 beschrieben. Die Katalysatoren können entweder unter starkem Rühren (24000U/Min mit Turrax) oder unter Rühren hergestellt werden, wie in der US 5,158,922 beschrieben.

Insbesondere als Katalysator geeignet sind für die Alkoxylierung Doppelmetallcyanid-Verbindungen, die Zink, Kobalt oder Eisen oder zwei davon enthalten. Besonders geeignet ist beispielsweise Berliner Blau.

Bevorzugt werden kristalline DMC-Verbindungen eingesetzt. In einer bevorzugten Ausführungsform wird eine kristalline DMC-Verbindung vom Zn-Co-Typ als Katalysator verwendet, der als weitere Metallsalzkomponente Zinkacetat enthält. Derartige Verbindungen kristallisieren in monokliner Struktur und weisen einen plättchenförmigen Habitus auf. Derartige Verbindungen werden beispielsweise in der WO 00/74845 oder der PCT/EP01/01893 beschrieben.

Als Katalysator geeignete DMC-Verbindungen können prinzipiell auf alle dem Fachmann bekannten Arten hergestellt werden. Beispielsweise können die DMC-Verbindungen durch direkte Fällung, "incipient wetness"-Methode, durch Herstellung einer Precursor-Phase und anschließende Umkristallisation hergestellt werden.

Die DMC-Verbindungen können als Pulver, Paste oder Suspension eingesetzt werden oder zu einem Formkörper verformt werden, in Formkörpern, Schäume oder ähnliches eingebracht werden oder auf Formkörper, Schäume oder ähnliches aufgebracht werden.

Die zur Alkoxylierung eingesetzte Katalysator-Konzentration, bezogen auf das Endmengengerüst ist typischerweise kleiner als 2000 ppm (d.h. mg Katalysator pro kg Produkt), bevorzugt kleiner als 1000 ppm, insbesondere kleiner als 500 ppm, besonders bevorzugt kleiner als 100 ppm, beispielsweise kleiner als 50 ppm oder 35 ppm, insbesondere bevorzugt kleiner als 25 ppm.

Die Additionsreaktion wird bei Temperaturen von 90 bis 240°C, vorzugsweise von 120 bis 180°C, im geschlossenen Gefäß ausgeführt. Das Alkylenoxid oder die Mischung verschiedener Alkylenoxide wird der Mischung aus erfindungsgemäßen Alkanolgemisch und Alkali unter dem bei der gewählten Reaktionstemperatur herrschenden Dampfdruck des Alkylenoxidgemisches zugeführt. Gewünschtenfalls kann das Alkylenoxid mit bis zu etwa 30 bis 60 % mit einem Inertgas verdünnt werden. Dadurch wird eine zusätzliche Sicherheit gegen explosionsartige Polyaddition des Alkylenoxids gegeben.

Wird ein Alkylenoxidgemisch eingesetzt, so werden Polyetherketten gebildet, in denen die verschiedenen Alkylenoxidbausteine praktisch statistisch verteilt sind. Variationen in der Verteilung der Bausteine längs der Polyetherkette ergeben sich aufgrund unterschiedlicher Reaktionsgeschwindigkeiten der Komponenten und können auch willkürlich durch kontinuierliche Zufuhr einer Alkylenoxidmischung programmgesteuerter Zusammensetzung erreicht werden. Werden die verschiedenen Alkylenoxide nacheinander zur Reaktion gebracht, so erhält man Polyetherketten mit blockartiger Verteilung der Alkylenoxid-Bausteine.

Die Länge der Polyetherketten schwankt innerhalb des Reaktionsprodukts statistisch um einen Mittelwert, den sich im Wesentlichen aus der Zusatzmenge ergebenden stöchiometrischen Wert.

Bevorzugte Alkoxylat-Gemische der allgemeinen Formel (III) können erhalten werden durch Umsetzung von Alkoholen der allgemeinen Formel C₅H₁₁CH(C₃H₇)CH₂OH mit Propylenoxid/Ethylenoxid in der vorstehend angegebenen Reihenfolge unter Alkoxylierungsbedingungen. Geeignete Alkoxylierungsbedingungen sind vorstehend und in Nikolaus Schönfeldt, Grenzflächenaktive Äthylenoxid-Addukte, Wissenschaftliche Verlagsgesellschaft mbH Stuttgart 1984 beschrieben. In der Regel wird die Alkoxylierung in Gegenwart basischer Katalysatoren wie KOH in Substanz durchgeführt. Die Alkoxylierung kann jedoch auch unter Mitverwendung eines Lösungsmittels durchgeführt werden. Dabei wird eine Polymerisation des Alkylenoxids in Gang gesetzt, bei der es zwangsläufig zu einer statistischen Verteilung von Homologen kommt, deren Mittelwert vorliegend mit p, n, m und q angegeben wird.

Bei einer bevorzugt zunächst durchgeführten Propoxylierung und erst nachfolgenden Ethoxylierung kann der Gehalt an Restalkohol in den Alkoxylaten vermindert werden, da Propylenoxid gleichmäßiger an die Alkoholkomponente addiert wird. Im Unterschied dazu reagiert Ethylenoxid vorzugsweise mit Ethoxylaten, so dass bei einer anfänglichen Verwendung von Ethylenoxid zur Umsetzung mit den Alkanolen eine breitere Homologenverteilung resultieren kann. Die erfindungsgemäß eingesetzten AlkoholGemische haben in der Regel einen Eigengeruch, der durch die vollständige Alkoxylierung weitestgehend unterdrückt werden kann.

Die erfindungsgemäßen Alkoxylat-Gemische erfordern zum Absenken des Restalkohol-Gehaltes nur einen, vorzugsweise direkt an den Alkohol gebundenen, Propylenoxid(PO)-Block von sehr kurzer Länge. Dies ist insbesondere deshalb sehr vorteilhaft, weil die biologische Abbaubarkeit des Produktes bei Verlängerung des PO-Blocks sinkt. Derartige Alkoxylat-Gemische ermöglichen somit maximale Freiheitsgrade bei der Wahl der Länge des PO-Blockes, wobei die Länge nach unten durch den steigenden Restalkoholgehalt und nach oben durch die Verschlechterung der biologischen Abbaubarkeit begrenzt ist.

Die blockförmigen iso-Tridecanolalkoxylate der Formel (V) sind beispielsweise in der DE 196 21 843 A1 beschrieben, deren gesamter diesbezüglicher Offenbarungsgehalt in die vorliegende Erfindung durch Bezugnahme eingeschlossen wird.

Das als Alkoholkomponente zugrunde liegende iso-Tridecanol (Isotridecylalkohol) ist synthetischen Ursprungs und wird durch Oligomerisierung geeigneter niederer Olefinbausteine und anschließende Oxosynthese (Hydroformylierung) hergestellt. So kann man Isobutylen, 1-Butylen, 2-Butylen oder Gemische hieraus katalytisch trimerisieren, Propylen katalytisch tetramerisieren oder 2-Methyl-1-penten katalytisch dimerisieren. Die so erhältlichen C₁₂-Olefine werden dann zum homologen C₁₃-Alkohol, beispielsweise mittels CO und H₂ an einem geeigneten Katalysator, umgesetzt.

Die Hauptmenge des iso-Tridecanols besteht aus primären C₁₃-Alkanolen mit mindestens 3, insbesondere 4 Verzweigungen (Alkylseitenketten). In der Regel handelt es sich um Tetramethylnonanole, z. B. 2,4,6,8-Tetramethyl-1-nonanol oder 3,4,6,8-Tetramethyl-1-nonanol. Auch Ethyldimethylnonanole wie 5-Ethyl-4,7-dimethyl-1-nonanol können vorliegen.

Als zugrundeliegende Alkoholkomponente kommen jedoch nicht nur reines iso-Tridecanol sondern auch Homologenmischungen aus verzweigten C₁₁- bis C₁₄-Alkanolen, welche iso-Tridecanol als Hauptkomponente enthalten, in Betracht. Solche Homologenmischungen entstehen unter bestimmten Bedingungen bei der oben geschilderten Oligomerisierung niederer Olefinbausteine und anschliessenden Oxosynthese. Eine typische Zusammensetzung einer solchen Mischung ist die folgende:
- verzweigtes C₁₁-Alkanol (iso-Undecanol) 2-15 Gew.-%,
- verzweigtes C₁₂-Alkanol (iso-Dodecanol) 15-35 Gew.-%,
- iso-Tridecanol 55-75 Gew.-% und
- verzweigtes C₁₄-Alkanol (iso-Tetradecanol) 1-10 Gew.-%.
Von dem in der vorliegenden Erfindung verwendeten iso-Tridecanol sind die "C₁₃/C₁₅-Oxoalkohole" abzugrenzen, welche Gemische aus entsprechenden linearen Olefinen, also alpha -Dodecen und alpha -Tetradecen, die hydroformyliert worden sind, darstellen. Die erhaltenen C₁₃- und C₁₅-Alkanole sind linear oder weisen maximal eine Verzweigung auf.

Die Alkoxylierungsgrade x und y, welche in der Regel Durchschnittswerte darstellen, da meist eine statistische Verteilung der Alkylenoxid-Einheiten mit einem Häufigkeitsmaximum vorliegt, bedeuten vorzugsweise unabhängig voneinander Zahlen von 1,5 bis 12. Durch spezielle Alkoxylierungskatalysatoren, z. B. modifizierte Bentonite oder Hydrotalkite, wie sie in der WO-A 95/04024 beschrieben sind, kann die statistische Verteilung stark eingeengt werden, so dass man "narrow range-Alkoxylate" erhält.

Die beschriebenen blockförmigen iso-Tridecanolalkoxylate (V) sind entweder Ethylenoxid-Propylenoxid bzw. Butylenoxid-Addukte der Formel (Va)

R-O-(C₂H₄O)ₓ-(CₙH₂ₙO)_{y}-H (Va)

mit n = 3 oder 4 (Va) oder Propylenoxid bzw. Butylenoxid-Ethylenoxid-Addukte der Formel (Vb)

R-O-(CₘH₂ₘO)ₓ-(C₂H₄O)_{y}-H (Vb)

mit m = 3 oder 4 (Vb).

Steht m oder n für die Zahl 3 oder 4, wird die Zahl 3 (Propylenoxid-Block) bevorzugt.

Das Verhältnis der Variablen x und y, welches mit für die Balance zwischen hydrophilen und hydrophoben Molekül teilen ausschlaggebend ist, ist bei den Addukten (Va) größer oder gleich 1, vorzugsweise beträgt das Verhältnis von x zu y 1 : 1 bis 4 : 1, insbesondere 1,5 : 1 bis 3 : 1.

Das Verhältnis der Variablen x und y ist bei den Addukten (Vb) etwas weniger kritisch und beträgt in der Regel 1 : 3 bis 3 : 1, vorzugsweise 1 : 1,5 bis 3 : 1.

Eine andere geeignete Niotensidklasse sind endgruppenverschlossene Alkoholalkoxylate, insbesondere von zuvor genannten Alkoholalkoxylaten. In einer besonderen Ausführungsform handelt es sich um die entsprechenden endgruppenverschlossenen Alkoholalkoxylate der Alkoholalkoxylate der allgemeinen Formeln (I), (II), (III) und (V). Der Endgruppenverschluss kann beispielsweise durch Dialkylsulfat, C₁₋₁₀-Alkylhalogenide, Phenylhalogenide, vorzugsweise -chloride, -bromide, besonders bevorzugt Cyclohexylchlorid, Cyclohexylbromid, Phenylchlorid oder Phenylbromid erfolgen.

Beispiele für endgruppenverschlossene Alkoxylate sind auch in der DE-OS 37 26 121 beschrieben, deren gesamte diesbezügliche Offenbarung in die vorliegende Erfindung durch Bezugnahme eingeschlossen wird.

Die Verbindungen der Formel (V) werden durch Umsetzung von Polyoxyalkylenverbindungen der Formel (VII),

R^{v}-O(CH₂-CHR^{II}-O)ₘ(CH₂-CHR^{III}-O)ₙH (VII)

in der R^{v} Wasserstoff oder C₁-C₂₀-Alkyl bedeutet und R^{II}, R^{III}, m' und n' jeweils die oben genannte Bedeutung besitzen, mit einem Dialkylsulfat der Formel (VIII)

(R^{IV}O)₂SO₂ (VIII) oder einem C₁C₁₀-Alkyl-, insbesondere C₁-C₄-Alkylhalogenid, vorzugsweise -chlorid oder -bromid, Cyclohexyl- oder Phenylhalogenid, vorzugsweise -chlorid oder -bromid,
in der R^{IV} die oben genannte Bedeutung besitzt, in Gegenwart von Alkalihydroxid hergestellt. Die Umsetzung wird bei einer Temperatur von 20 bis 60 °C in Gegenwart einer wässrigen Lösung eines Alkalihydroxids vorgenommen, wobei die Konzentration an Alkalihydroxid während der gesamten Dauer der Umsetzung nicht kleiner als 35 Gew.-%, bezogen auf die wässrige Phase sein darf, und man je Moläquivalent organischer Hydroxygruppen mindestens 1 Mol Dialkylsulfat der Formel (VIII) und mindestens ein Mol Alkalihydroxid verwendet. Alle in den oben genannten Formeln (VI), (VII) und (VIII) auftretenden Alkylgruppen können sowohl geradkettig als auch verzweigt sein. R^{I}, R^{IV} und R^{V} sind beispielsweise Methyl, Ethyl, Propyl, Isopropyl, Butyl, Isobutyl oder sec-Butyl.

R¹ und R^{V} sind weiterhin beispielsweise Pentyl, Isopentyl, sec-Pentyl, tert.-Pentyl, Hexyl, 2-Methylpentyl, Heptyl, Octyl, 2-Ethylhexyl, Osooctyl, Nonyl, Isononyl, Decyl, Isodecyl, Undecyl, Dodecyl, Tridecyl, 3,5,5,7-Tetramethylnonyl, Isotridecyl, Tetradecyl, Pentadecyl, Hexadecyl, Heptadecyl, Octadecyl, Nonadecyl oder Eicosyl (die Bezeichnungen Isooctyl, Isononyl, Isodecyl und Isotridecyl sind Trivialbezeichnungen und stammen von den nach der Oxosynthese erhaltenen Alkoholen - vgl. dazu Ullmann, Enzyklopädie der Technischen Chemie, 4. Auflage, Band 7, Seiten 215 bis 217, sowie Band 11, Seiten 435 und 436).

Bevorzugt verwendet man als Ausgangsprodukte Polyoxyalkylenderivate der Formel (VI), in der R^{V} Wasserstoff oder C₈-C₁₆-Alkyl bedeutet.

Weiterhin bevorzugte Polyoyalkylenderivate der Formel (VII) sind solche, bei denen die Summe von m' und n' 3 bis 10 oder 50 bis 100 beträgt.

Als Alkylierungsmittel ist ein Dialkylsulfat der Formel (VIII) bevorzugt, in der R^{IV} Ethyl oder insbesondere Methyl bedeutet.

Wenn man solche Polyoxyalkylenderivate der Formel (VII), in der R^{V} Wasserstoff bedeutet, als Ausgangsprodukte verwendet, erfolgt eine zweifache Veretherung. In diesem Falle gelangt man zu veretherten Polyoxyalkylenderivaten der Formel (VI), in der R' identisch ist mit RIV.

Eine andere Klasse nichtionischer Tenside sind Alkylpolyglucoside mit vorzugsweise 6 bis 22, besonders bevorzugt 10 bis 18 Kohlenstoffatomen in der Alkylkette. Diese Verbindungen enthalten im Allgemeinen 1 bis 20, vorzugsweise 1,1 bis 5 Glucosideinheiten.

Beispiele für Verbindungen der Formeln (IX) bis (XI) sind die Umsetzungsprodukte von n-Butyltriglykolamin der Formel H₂N-(CH₂-CH₂-O)₃-C₄H₉ mit Dodecansäuremethylester oder die Reaktionsprodukte von Ethyltetraglykolamin der Formel H₂N-(CH₂-CH₂-O)₄-C₂H₅ mit einem handelsüblichen Gemisch von gesättigten C₈- bis C₁₈-Fettsäuremethyl-estern.

Weiterhin eignen sich als nichtionische Tenside noch, Polyhydroxy- oder Polyalkoxyfettsäurederivate wie Polyhydroxyfettsäureamide, N-Alkoxy- oder N-Aryloxypolyhydroxyfettsäureamide, Fettsäureamidethoxylate, insbesondere endgruppenverschlossene, sowie Fettsäurealkanolamidalkoxylate.

Weiterhin eignen sich als nichtionische Tenside noch Blockcopolymere aus Ethylenoxid, Propylenoxid und/oder Butylenoxid (Pluronic^{®}- und Tetronic^{®}-Marken der BASF AG bzw. BASF Corp.). In einer bevorzugten Ausführungsform handelt es sich um Dreiblockcopolymere mit Polyethylen/Polypropylen/Polyethylen-Blöcken und einem Molekulargewicht von 4.000 bis 16.000, wobei der Gewichtsanteil der Polyethylenblöcke 55 bis 90 %, bezogen auf das Dreiblockcopolymer, beträgt. Besonders bevorzugt sind Dreiblockcopolymere mit einem Molekulargewicht von mehr als 8000 und einem Polyethylengehalt von 60 bis 85 Gew.-%, bezogen auf das Dreiblockcopolymer. Diese bevorzugten Dreiblockcopolymere sind insbesondere unter den Bezeichnungen Pluronic F127, Pluronic F108 und Pluronic F98, jeweils von der BASF Corp., kommerziell erhältlich und in der WO 01/47472 A2 beschrieben, deren gesamte diesbezügliche Offenbarung durch Bezugnahme in die vorliegende Erfindung eingeschlossen ist.

Darüber hinaus können bevorzugt auch einseitig oder zweiseitig verschlossene Blockcopolymere aus Ethylenoxid, Propylenoxid und/oder Butylenoxid verwendet werden. Einen einseitigen Verschluss erreicht man beispielsweise dadurch, dass man als Ausgangsverbindung zur Umsetzung mit einem Alkylenoxid einen Alkohol, insbesondere einen C₁₋₂₂-Alkylalkohol, beispielsweise Methanol verwendet. Darüber hinaus kann man - beispielsweise den zweiseitigen - Endgruppenverschluss durch Umsetzung des freien Blockcopolymers mit Dialkylsulfat, C₁₋₁₀-Alkylhalogenide, Phenylhalogenide, vorzugsweise -chloride, -bromide, besonders bevorzugt Cyclohexylchlorid, Cyclohexylbromid, Phenylchlorid oder Phenylbromid bewirken.

Man kann zusätzlich einzelne nichtionische Tenside oder eine Kombination unterschiedlicher Niotenside einsetzen. Es können nichtionische Tenside aus nur einer Klasse zum Einsatz gelangen, insbesondere nur alkoxylierte C₄- bis C₂₂-Alkohole. Alternativ kann man aber auch Tensidmischungen aus verschiedenen Klassen verwenden.

Wenn in der erfindungsgemäß zu verwendenden Zusammensetzung ein anionisches Tensid verwendet wird, so kann dieses vorzugsweise ausgewählt sein aus der Gruppe, bestehend aus Fettalkoholsulfaten, sulfatierten alkoxylierten Alkoholen, Alkansulfonaten, N-Acylsarkosinaten, Alkylbenzolsulfonaten, Olefinsulfonaten und -disulfonaten, Alkylestersulfonaten, sulfonierten Polycarbonsäuren, Alkylglycerinsulfonaten, Fettsäureglycerinestersulfonaten, Alkylphenolpolyglykolethersulfaten, Paraffinsulfonaten, Alkylphosphaten, Acylisothionaten, Acyltauraten, Acylmethyltauraten, Alkylbernsteinsäuren, Alkenylbernsteinsäuren oder deren Halbster oder Halbamide, Alkylsulfonbemsteinsäuren oder deren Amide, Mono- und Diester von Sulfonbemsteinsäuren, sulfatierte Alkylpolyglycosiden, Alkylpolyglykolcarboxylaten und Hydroxyalkylsarkosinaten.

Geeignete anionische Tenside sind Fettalkoholsulfate von Fettalkoholen mit beispielsweise 8 bis 22, vorzugsweise 10 bis 18 Kohlenstoffatomen, C₁₂-C₁₈-Alkoholsulfate, Laurylsulfat, Cetylsulfat, Myristylsulfat, Palmitylsulfat, Stearylsulfat und Talgfettalkoholsulfat.

Weitere geeignete anionische Tenside sind sulfatierte ethoxylierte C₈- bis C₂₂-Alkohole (Alkylethersulfate) bzw. deren lösliche Salze. Verbindungen dieser Art werden beispielsweise dadurch hergestellt, dass man zunächst einen C₈- bis C₂₂-, vorzugsweise einen C₁₀- bis C₁₈-Alkohol z. B. einen Fettalkohol, alkoxyliert und das Alkoxylierungsprodukt anschließend sulfatiert. Für die Alkoxylierung verwendet man vorzugsweise Ethylenoxid, wobei man pro Mol Alkohol 1 bis 50, vorzugsweise 1 bis 20 Mol Ethylenoxid einsetzt. Die Alkoxylierung der Alkohole kann jedoch auch mit Propylenoxid allein und gegebenenfalls Butylenoxid durchgeführt werden. Geeignet sind außerdem solche alkoxylierte C₈- bis C₂₂-Alkohole, die Ethylenoxid und Propylenoxid oder Ethylenoxid und Butylenoxid oder Ethylenoxid und Propylenoxid und Butylenoxid enthalten. Die alkoxylierten C₈- bis C₂₂-Alkohole können die Ethylenoxid-, Propylenoxid- und Butylenoxideinheiten in Form von Blöcken oder in statistischer Verteilung enthalten. Je nach Art des Alkoxylierungskatalysators kann man Alkylethersulfate mit breiter oder enger Alkylenoxid-Homologen-Verteilung erhalten.

Weitere geeignete anionische Tenside sind Alkansulfonate wie C₈- bis C₂₄-, vorzugsweise C₁₀- bis C₁₈-Alkansulfonate sowie Seifen wie beispielsweise die Na- und K-Salze von gesättigten und/oder ungesättigten C₈- bis C₂₄-Carbonsäuren.

Weitere geeignete anionische Tenside sind lineare C₈- bis C₂₀-Alkylbenzolsulfonate ("LAS"), vorzugsweise lineare C₉- bis C₁₃-Alkylbenzolsulfonate und -Alkyltoluolsulfonate.

Weiterhin eignen sich als anionische Tenside noch C₈-bis C₂₄-Olefinsulfonate und -disulfonate, welche auch Gemische aus Alken- und Hydroxyalkansulfonaten bzw. -disulfonate darstellen können, Alkylestersulfonate, sulfonierte Polycarbonsäuren, Alkylglycerinsulfonate, Fettsäureglycerinestersulfonate, Alkylphenolpoly-glykolethersulfate, Paraffinsulfonate mit ca. 20 bis ca. 50 C-Atomen (basierend auf aus natürlichen Quellen gewonnenem Paraffin oder Paraffingemischen), Alkylphosphate, Acylisethionate, Acyltaurate, Acylmethyltaurate, Alkylbemsteinsäuren, Alkenylbernsteinsäuren oder deren Halbester oder Halbamide, Alkylsulfobernsteinsäuren oder deren Amide, Mono- und Diester von Sulfobernsteinsäuren, Acylsarkosinate, sulfatierte Alkylpolyglucoside, Alkylpolyglykolcarboxylate sowie Hydroxyalkylsarkosinate.

Die anionischen Tenside werden der erfindungsgemäßen Zusammensetzung vorzugsweise in Form von Salzen zugegeben. Geeignete Kationen in diesen Salzen sind Alkalimetallionen wie Natrium, Kalium und Lithium und Ammoniumsalze wie z. B. Hydroxyethylammonium-, Di(hydroxyethyl)ammonium- und Tri(hydroxyethyl)ammoniumsalze.

Man kann einzelne anionische Tenside oder eine Kombination unterschiedlicher Aniontenside einsetzen. Es können anionische Tenside aus nur einer Klasse zum Einsatz gelangen, beispielsweise nur Fettalkoholsulfate oder nur Alkylbenzolsulfonate, man kann aber auch Tensidmischungen aus verschiedenen Klassen verwenden, z. B. eine Mischung aus Fettalkoholsulfaten und Alkylbenzolsulfonaten.

Wenn in der erfindungsgemäßen Zusammensetzung ein kationisches Tensid verwendet wird, so ist dieses vorzugsweise ausgewählt aus der Gruppe, bestehend aus Tetraalkylammuniumsalze, Imidazoliniumsalze und Aminoxiden.

Ferner können kationische Tenside eingesetzt werden, wie sie in der WO 99/19435 beschrieben sind. Beispiele sind C₈-bis C₁₆-Dialkyldimethylammoniumsalze, Dialkoxydimethylammoniumsalze oder Imidazoliniumsalze mit langkettigem Alkylrest.

Man kann einzelne kationische Tenside oder eine Kombination unterschiedlicher kationischer Tenside einsetzen. Es können kationische Tenside aus nur einer Klasse zum Einsatz gelangen, man kann aber auch Tensidmischungen aus verschiedenen Klassen verwenden.

Beispiele für die Monomereinheiten der Fomel (XII) sind Diallylamin, Methyldiallylamin, Tetramethylammoniumsalze, Acrylamidopropyl(trimethyl)ammoniumsalze (R¹, R² und R³ = H, R⁴ = C(O)NH(CH₂)₂N⁺ (CH₃)₃X⁻), Methacrylamidopropyl(trimethyl)ammoniumsalze (R¹ und R² = H, R³ = CH₃, H, R⁴ = C(O)NH(CH₂)₂N⁺ (CH₃)₃X⁻).

Besonders bevorzugte amphotere Tenside enthalten als Monomereinheiten Derivate des Diallylamins, insbesondere Dimethyldiallylammoniumsalz und/oder Methacrylamidopropyl(trimethyl)-ammoniumsalz, vorzugsweise in Form des Chlorids, Bromids, lodids, Hydroxids, Phosphats, Sulfats, Hydrosulfats, Ethylsulfasts, Methylsulfats, Mesylats, Tosylats, Formiats oder Acetats in Kombination mit Monomereinheiten aus der Gruppe der ethylenisch ungesättigten Carbonsäuren.

Man kann einzelne amphotere Tenside oder eine Kombination unterschiedlicher amphoterer Tenside einsetzen.

Darüber hinaus ist es im Rahmen der vorliegenden Erfindung möglich, Tenside unterschiedlicher Klassen, beispielsweise anionische Tenside mit kationischen Tensiden amphotere Tenside mit nichtionischen Tensiden usw. in der erfindungsgemäßen Zusammensetzung zu verwenden. Dabei können Tenside aus einer, zwei, drei oder vier unterschiedlichen Tensidklassen (nichtionisch, anionisch, kationisch und amphoter) verwendet werden.

In einer bevorzugten Ausführungsform handelt es sich bei der verwendeten Schwefelsäure um verdünnte Schwefelsäure mit einem Gehalt von 1 bis 80 g/l H₂SO₄, besonders bevorzugt 2 bis 60 g/l H₂SO₄, insbesondere 5 bis 40 g/l H₂SO₄.

In einer weiteren bevorzugten Ausführungsform, insbesondere wenn die erfindungsgemäße Zusammensetzung zur Vorbehandlung der kupferhaltigen Ausgangsmaterialien verwendet wird, handelt es sich bei der verwendeten Schwefelsäure um konzentrierte Schwefelsäure mit einem Gehalt von vorzugsweise 25 bis 500 g/l H₂SO₄, besonders bevorzugt 50 bis 400 g/l H₂SO₄, insbesondere 75 bis 300 g/l H₂SO₄.

Die erfindungsgemäß zu verwendende Zusammensetzung kann gegebenenfalls weitere Zusätze zur Metallextraktion enthalten, die dem Fachmann an sich bekannt sind. Ein Beispiel hierfür sind Eisen(III)-lonen für die Kupfergewinnung, vorzugsweise in einer Konzentration von 5 bis 50 g/l, bezogen auf die erfindungsgemäße Zusammensetzung. Die Eisen(III)-lonen werden dabei vorzugsweise in Form von Eisen(III)-sulfat in der erfindungsgemäßen Zusammensetzung verwendet. Weitere geeignete Zusätze sind beispielsweise Additive, welche Ca²⁺-Ionen, die oftmals vergesellschaftet mit Kupfer auftreten, stabilisieren. Beispiele hierfür sind Natriumpolyacrylate. Weitere geeignete Additive sind Aluminiumionen.

Gegenstand der vorliegenden Erfindung ist ein Verfahren zur Gewinnung von Metallen aus metallhaltigen Ausgangsmaterialien. Hierbei kann es sich zur Gewinnung von Kupfer bevorzugt um kupferarme Erze und Abfallprodukte mit einem Kupfergehalt von vorzugsweise kleiner 3 %, besonders bevorzugt kleiner 2 %, insbesondere kleiner 1 %, handeln. Bei den Abfallprodukten kann es sich beispielsweise um die bei der Schwefelsäurefabrikation anfallenden kupferhaltigen Pyritabbrände handeln.

Darüber hinaus eignet sich das erfindungsgemäße Verfahren auch zur Gewinnung von Kupfer aus kupferhaltigen Oxiden, Sulfiden, Arseniden, Chloriden und Carbonaten. Die wichtigsten sulfidischen Kupfererze sind dabei Kupferkies (Chalkopyrit) CuFeS₂ (= "Cu₂S · Fe₂S₃"), Buntkupfererz (Bomit) Cu₃FeS₃ (= "3Cu₂S · Fe₂S₃"), Cubanit CuFe₂S₃ und Kupferglanz (Chalkosin) Cu₂S. Unter den oxidischen Erzen sind das rote Rotkupfererz (Cuprit) Cu₂O, der grüne Malachit Cu₂(OH)₂(CO₃) (= "CuCO₃ · Cu(OH)₂") und die blaue Kupferlasur (Azurit) Cu₃(OH)₂(CO₃)₂ (= "2CuCO₃ · Cu(OH)₂") zu nennen.

Daneben eignet sich das erfindungsgemäße Verfahren auch zur Gewinnung von Kupfer aus kupferarmen Erzen und Abfallprodukten mit einem Kupfergehalt von im Allgemeinen kleiner 2 %. Derartige Abfallprodukte fallen beispielsweise bei der Schwefelsäurefabrikation als kupferhaltige Pyritabbrände an.

Das erfindungsgemäße Verfahren umfasst dabei die folgenden Verfahrensschritte:
(a) Bereitstellen eines gegebenenfalls gemahlenen metallhaltigen Materials,
(b) Bereitstellen einer erfindungsgemäß zu verwendenden Zusammensetzung und
(c) Inkontaktbringen des metallhaltigen Materials mit der Zusammensetzung, wobei eine mit Metall angereicherte Mutterlauge erhalten wird.

Unter dem Inkontaktbringen des metallhaltigen Materials mit der Zusammensetzung wird vorzugsweise verstanden, dass das metallhaltige Material aufgehäuft wird und anschließend die Zusammensetzung durch das aufgehäufte Material durchperkoliert oder durchrieselt. Die Besprühung des metallhaltigen Materials erfolgt dabei vorzugsweise tropfenweise. Nach dem Abtrennen des Metalls aus der Zusammensetzung wird diese für weitere Extraktionsvorgänge vorzugsweise erneut verwendet.

In einer bevorzugten Ausführungsform wird vor der Metallerextraktion das metallhaltige Material zunächst gemahlen, so dass Teilchen mit einem Durchmesser von ungefähr 10 cm erhalten werden. Dabei kann bereits während dem Mahlprozess das erfindungsgemäß vorgesehene Tensid zugesetzt werden. Die gemahlenen Teilchen werden dann angehäuft, wobei üblicherweise Haufen mit 100.000 bis 500.000 Tonnen Ausgangsmaterial gebildet werden. Diese werden dann - wie zuvor beschrieben - mit Hilfe der erfindungsgemäßen Zusammensetzung extrahiert.

Es sei ausdrücklich darauf verwiesen, dass die Zusammensetzungen während des Extraktionsverfahrens in unterschiedlichen Konzentrationsbereichen appliziert werden kann (Gradientenfahrweise). Darüber hinaus können die oberflächenaktiven Stoffe (als Teil der Zusammensetzung) teilweise oder ganz auch schon vor Beginn des Extraktionsverfahrens dem Ausgangsmaterial bzw. Gestein, z. B. beim Mahlen des Materials, zugesetzt werden.

Die Aufwandmenge an nichtionischem Tensid beträgt erfahrungsgemäß pro Tonne Ausgangsmaterial 1 bis 30 ppm, vorzugsweise 1 bis 20 ppm, besonders bevorzugt 2 bis 15 ppm, insbesondere 3 bis 10 ppm. Es hat sich dabei als günstig erwiesen, zu Beginn des Extraktionsverfahrens eine höhere Konzentration einzusetzen als gegen Ende der Extraktion.

In Abhängigkeit des zu extrahierenden Ausgangsmaterials kann es auch bevorzugt sein, wenn das zu extrahierende Ausgangsmaterial zur Benetzung zunächst mit einer konzentrierten Schwefelsäure vorbehandelt wird und im Anschluss daran die Extraktion des Metalls mit einer verdünnten Schwefelsäure erfolgt. Eine derartige Vorgehensweise empfiehlt beispielsweise die US 4,091,070 für die Kupfergewinnung, deren diesbezügliche Offenbarung durch Bezugnahme in die vorliegende Erfindung einbezogen wird. Im Rahmen der vorliegenden Erfindung kann dabei der konzentrierten und der verdünnten Schwefelsäure das erfindungsgemäß vorgesehene mindestens eine Tensid zugegeben werden. Alternativ ist es jedoch auch möglich, dass nur der konzentrierten oder nur der verdünnten Schwefelsäure das Tensid zugegeben wird.

Wenn zur Vorbehandlung (Benetzung) eine konzentrierte Schwefelsäure verwendet wird, so beträgt deren Konzentration vorzugsweise 25 bis 500 g/l H₂SO₄, besonders bevorzugt 50 bis 400 g/l H₂SO₄, insbesondere 75 bis 300 g/l H₂SO₄.

Wenn als Metall Kupfer gewonnen werden soll, ist eine weitere im Rahmen der vorliegenden Erfindung geeignete Vorbehandlung für das zu extrahierende kupferhaltige Ausgangsmaterial das Rösten. Dieses erfolgt vorzugsweise durch Erhitzen in so genannten Röstöfen, beispielsweise Drehrohröfen, Etagenöfen oder Wirbelschichtröstöfen, unter Luftzutritt. Dabei werden im Allgemeinen Metallsulfide, -arsenide und -antimonide des Kupfers und vergesellschafteter Metalle in die entsprechenden Oxide überführt.

Aus der erhaltenen wässrigen Mutterlauge kann in einer bevorzugten Ausführungsform das Metall durch Extraktion mit einem organisch löslichen Komplexbildner entfernt werden. Hierzu können beispielsweise organische lösliche Komplexbildner der Firmen Cognis (Lix^{®}-Typen) und Cytec verwendet werden. Vorzugsweise handelt es sich dabei um 2-Hydroxy-5-nonylacetophenonoxim, das in einer organischen Lösung (Shellsol^{®}) eingesetzt wird. Im Anschluss hieran wird das Kupfer aus der organischen Lösung vorzugsweise durch wässrige Schwefelsäure in eine wässrige, vorzugsweise stark saure Phase überführt und hieraus auf elektrochemischem Weg gewonnen. Diese Verfahrensweisen sind dem Fachmann an sich bekannt und beispielsweise in US 4,120,935 und US 4,091,070 beschrieben, deren diesbezügliche Offenbarung durch Bezugnahme in die vorliegende Erfindung eingeschlossen wird.

Bei der Kupfergewinnung kann alternativ aus der in dem erfindungsgemäßen Verfahren erhaltenen Mutterlauge das extrahierte Kupfer auch durch Eisenschrott ausgefällt werden. Diese Vorgehensweise, die im Allgemeinen als "Zementieren" bezeichnet wird, ist dem Fachmann an sich bekannt. Üblicherweise schließt sich an das Zementieren ein Verschmelzen des gewonnenen Kupfers sowie eine elektrolytische Aufreinigung an.

Wie bereits erwähnt sind besonders diejenigen Tenside bevorzugt, die während der Extraktion der wässrigen schwefelsäurehaltigen Mutterlauge mit dem organischen Komplexbildner in der wässrigen schwefelsäurehaltigen Phase verbleiben. In einer bevorzugten Ausführungsform der vorliegenden Erfindung kann die wässrige schwefelsäurehaltige Lösung, welche das mindestens eine Tensid enthält, somit für weitere Extraktionsdruchgänge verwendet werden. Damit kann vermieden werden, dass nach jedem Extraktionsdurchgang neues Tensid zugegeben werden muss. Eine derartige Recyclierung ist insbesondere aus ökonomischen Gründen vorteilhaft.

In einer weiteren Ausführungsform der vorliegenden Erfindung ist es auch möglich, dass erfindungsgemäß vorgesehene Tensid selbständig von der wässrigen schwefelsäurehaltigen Lösung, beispielsweise als eigene wässrige Lösung, auf das zu extrahierende Material aufzubringen. Dieses kann vorzugsweise unmittelbar vor, nach oder während der Auftragung der wässrigen schwefelsäurehaltigen Lösung erfolgen. Dabei ist es in Abhängigkeit des zu extrahierenden kupferhaltigen Materials gegebenenfalls ausreichend, wenn das erfindungsgemäß vorgesehene Tensid nur in den ersten Durchgängen der Extraktion verwendet wird, während im Anschluss daran die Menge an verwendetem Tensid graduell verringert werden kann (Gradientenfahrweise) oder aber auf den Tensidzusatz verzichtet werden kann.

Die Extraktion des metallhaltigen Ausgangsmaterials wird im Allgemeinen so lange durchgeführt, bis der Gehalt an extrahiertem Metall unter 1 g/l liegt. Hierfür sind in Abhängigkeit von der Art des zu extrahierenden Materials und dessen Menge Zeiträume von 5 Tagen bis mehreren Monaten üblich.

Die Erfindung wird durch die nachfolgenden Beispiele erläutert.

### Kontaktwinkelbestimmung:

Die Kontaktwinkel wurden mit einem videogestützten Hochgeschwindigkeits-Kontaktwinkelmessgerät des Typs OCAH 200 der Firma Dataphysics Instruments GmbH, Raiffeisenstr. 34, Filderstadt, auf einem extra-weißen Glasträger der Fa. Gerhard Menzel Glasbearbeitungswerk GmbH & Co. KG, Braunschweig, bestimmt. Die in Tabelle 1 aufgeführten erfindungsgemäßen Tenside bzw. Tensidkombinationen wurden in der in Tabelle 2 angegebenen Konzentration(Gew.%) in einer 2%igen wässrigen Schwefelsäurelösung eingesetzt. Der Kontaktwinkel wurde bei 23°C eine Sekunde nach Aufgabe bestimmt. Der Kontaktwinkel der 2%igen Schwefelsäure ohne Tensidzusatz beträgt unter diesen Bedingungen 50°. Nicht erfindungsgemäße Beispiele sind entsprechend in Tabelle 3 aufgeführt. Die Zahlenangaben zum Ethylenoxid-(EO) bzw. Propylen-(PO)-Gehalt sind als molar bezogen auf 1 Mol Alkohol zu verstehen (Tabelle 1). Die Alkoxylierung erfolgte blockweise in der angegebenen Reihenfolge oder durch Mischbegasung (Random/Mix).

### Säulenversuche:

Als Modell der industriell durchgeführten Haufenlaugung dienten Säulenversuche, bei denen repräsentative Proben des kuperhaltigen Gesteins in Säulen gepackt und mit verdünnter Schwefelsäurelösung ausgelaugt wurden. Der erfindungsgemäße Zusatz von Tensiden bewirkt dann eine Erhöhung der Kupferausbeute und/oder eine verbesserte Kinetik der Laugung.

Zur Überprüfung der verbesserten Wirksamkeit der beanspruchten tensidhaltigen Zusammensetzungen wurden jeweils 50-200 ppm Tensid enthaltende wässrige 2,0%ige Schwefelsäure-Lösungen im Vergleich zur entsprechenden kein Tensid enthaltenden Lösung eingesetzt. Die Laugung erfolgte jeweils über 30 Tage unter kontinuierlicher oder diskontinuierlicher Tensidzugabe bei einer Flussrate von 140 ml/Tag kg Erz.

Die Säulen hatten einen Innendurchmesser von 28 cm, eine Länge von 100 cm und waren jeweils mit ca. 90 kg Erz befüllt. Das Erz war auf eine Partikelgröße x von 0,2 ≤ x ≤ 2,5 cm gemahlen und gesiebt. Der Kupfergehalt betrug jeweils 0,5-1,5 g/t Gestein. Es wurden Erze (Probennahme Februar und September 2005) der Minen Minera El Alba, Calama, II Region, Chile eingesetzt. Die Ergebnisse sind in Tabelle 4 zusammengefasst.

Die kumulierten %-Angaben zur Kupferausbeute beziehen sich auf den Gesamtkupfergehalt der einzelnen Säulen. Der Kupfergehalt wurde mittels ICP-OES (Inductively coupled Plasma-Optical Emission Spectroscopy) auf einem Vista MPX der Firma Varian, Inc., Darmstadt bestimmt.

**Tabelle 1**

| Tensidsystem Beispiel Nr. | Chemische Zusammensetzung |
|---|---|
| 1 | C₁₀ Guerbet-Alkohol + 1,2 PO + 4,8 EO |
| 2 | C₁₀ Guerbet-Alkohol + 2,5 PO + 6,0 EO (Random/Mix. Fahrweise |
| 3 | C₁₀ Guerbet-Alkohol + 6,7 EO + 6,5 PO (Random/Mix. Fahrweise |
| 4 | C₉C₁₁-Oxo-Alkohol + 7 EO + 1,5 BuO |
| 5 | Iso-C₁₀-Oxo-Alkohol + 10 EO + 1,6 Pentenoxid |
| 6 | C₁₃-C₁₅ Oxo-Alkohol +6,1 EO + 3,2 PO, Endgruppenverschluss mit DMS (Dimethylsulfat) |
| 7 | C₁₃-Oxo-Alkohol + 5,8 EO + 2,5 EO |
| 8 | C₁₃-Oxo-Alkohol + 8 EO |
| 9 | C₁₃-Oxo-Alkohol + 10 EO |
| 10 | Iso-C₁₀-Oxo-Alkohol + 10 EO + 1,6 Pentenoxid / n-Hexanol + 5 EO 60/30 Gew.% |
| 11 | C₁₃C₁₅-Oxo-Alkohol + 6,1 EO + 3,3 PO , Endgruppenverschluss mit DMS (Dimethylsulfat) / 44PO + 38EO 60/35 Gew.% |
| 12 | Pluronic^{®} PE 6400 (PO-EO-Blockpolymerisat, BASF AG Ludwigshafen) |
| 13 | Pluronic^{®} PE 6800 (PO-EO-Blockpolymerisat, BASF AG Lud-wigshafen) |
| 14 | Emulan^{®} HE 50 (Alkoholethoxilat, BASF AG Ludwigshafen) |
| 15 | Plurafac^{®} LF 403 (Fettalkoholethoxilat, BASF AG Ludwigshafen) |
| 16 | Lutensol^{®} AT 11 (C₁₆C₁₈ Fettalkoholethoxilat, BASF AG Ludwigshafen) |
| 17 | Texapon^{®} NSO (wässrige Lösung, Laurylethersulfat, Na-Salz, Cognis, Düsseldorf) |

**Tabelle 2**

| Tensidsystem Beispiel Nr. | Gew.% in wässriger 2%iger Schwefelsäure | Kontaktwinkel [°] nach 1 sec bei 23 °C |
|---|---|---|
| 1 | 0,15 | 19 |
| 1 | 0,25 | 26 |
| 2 | 0,10 | 12 |
| 2 | 0,30 | 8 |
| 3 | 0,10 | 10 |
| 4 | 0,10 | 17 |
| 5 | 0,15 | 12 |
| 6 | 0,15 | 18 |
| 6 | 0,10 | 19 |
| 7 | 0,15 | 11 |
| 7 | 0,25 | 15 |
| 8 | 0,15 | 28 |
| 9 | 0,20 | 29 |
| 9 | 0,30 | 25 |
| 10 | 0,15 | 13 |
| 10 | 0,20 | 11 |
| 10 | 0,30 | 07 |
| 11 | 0,25 | 17 |

**Tabelle 3**

| Tensidsystem Beispiel Nr. | Gew. % in wässriger 2%iger Schwefelsäure | Kontaktwinkel [°] nach 1 sec bei 23 °C |
|---|---|---|
| 12 | 0,25 | 49 |
| 13 | 0,25 | 45 |
| 14 | 0,30 | 44 |
| 15 | 0,25 | 47 |
| 16 | 0,25 | 48 |
| 17 | 0,30 | 45 |

**Tabelle 4**

| | | Kumulierte Au-Ausbeute [%] nach | | | | |
|---|---|---|---|---|---|---|
| Tensidsystem Beispiel Nr. | Konzentrat ppm | 5 Tagen | 10 Tagen | 20 Tagen | 30 Tagen | Bemerkungen |
| - | - | 65 | 72,5 | 74 | 74,5 | El Alba, Februar 2005 |
| 1 | 50 | 67 | 73 | 76 | 77,5 | Kontinuierliche Tensidzugabe |
| 1 | 200 | 68 | 73,5 | 74,5 | 78,5 | 7 Tage, dann ohne Tensid-zugabe |
| 2 | 50 | 69,5 | 74 | 77 | 78 | Kontinuierliche Tensidzugabe |
| 2 | 150 | 70,5 | 77 | 77,5 | 77,5 | 10 Tage, dann ohne Tensid-zugabe |
| 3 | 50 | 66 | 74 | 76,5 | 78,5 | Kontinuierliche Tensidzugabe |
| 3 | 200 | 68,5 | 74,5 | 76 | 79 | 7 Tage, dann ohne Tensidzugabe |
| 4 | 40 | 67 | 74 | 75 | 76,5 | 10 Tage, dann ohne Tensidzugabe |
| | | | | | | |
| - | - | 68 | 74 | 78 | 78,5 | El Alba, September 2005 |
| 11 | 50 | 69 | 75 | 79 | 80,5 | Kontinuierliche Tensidzugabe |
| 10 | 50 | 70 | 76 | 79,5 | 81 | Kontinuierliche Tensidzugabe |
| 7 | 30 | 71 | 77 | 80 | 81,5 | Kontinuierliche Tensidzugabe |

## Patentansprüche

1. Verfahren zur Gewinnung von Metall aus metallhaltigen Materialien, umfassend die folgenden Verfahrensschritte:
(1a) Bereitstellen eines gegebenenfalls gemahlenen metallhaltigen Materials,
(1b) Bereitstellen einer wässrigen Zusammensetzung, die Schwefelsäure und mindestens ein Tensid gemäß wenigstens einer der folgenden Formeln enthält
Formel (I) R¹-O(CH₂CHR⁵-O)ᵣ(CH₂-CH₂-O-)ₙ(CH₂-CHR⁶-O-)ₛ(CH₂-CHR²-O-)ₘH (I)
mit der Bedeutung
R¹ mindestens einfach verzweigtes C₄₋₂₂-Alkyl oder -Alkylphenol,
R² C₃₋₄-Alkyl
R⁵ C₁₋₄-Alkyl
R⁶ Methyl oder Ethyl
n mittlerer Wert von 1 bis 50
m mittlerer Wert von 0 bis 20, vorzugsweise 0,5 bis 20
r mittlerer Wert von 0 bis 50
s mittlerer Wert von 0 bis 50,
wobei m mindestens 0,5 ist, wenn R⁵ Methyl oder Ethyl ist oder r den Wert 0 hat oder
Formel (II) R³-O-(CH₂-CH₂-O)ₚ (CH₂-CHR⁴-O-)_{q}H (II)
mit der Bedeutung
R³ verzweigtes oder unverzweigtes C₄₋₂₂-Alkyl oder -Alkylphenol
R⁴ C₃₋₄-Alkyl
p mittlerer Wert von 1 bis 50, vorzugsweise 4 bis 15
q mittlerer Wert von 0,5 bis 20, bevorzugt 0,5 bis 4, bevorzugter 0,5 bis 2
oder Alkoxylat-Gemische, enthaltend Alkoxylate
der Formel (III) C₅H¹¹CH(C₃H₇)CH₂O(B)ₚ(A)ₙ(B)ₘ(A)_{q}H (III)
mit der Bedeutung
A Ethylenoxy
B jeweils unabhängig C₃₋₁₀-Alkylenoxy, vorzugsweise Propylenoxy, Butylenoxy, Pentylenoxy oder Gemische davon,
wobei Gruppen A und B in Form von Blöcken in der angegebenen Reihenfolge vorliegen,
p Zahl von 0 bis 10,
n Zahl größer 0 bis 20,
m Zahl größer 0 bis 20,
q Zahl größer 0 bis 10,
p + n + m + q mindestens 1,
wobei
70 bis 99 Gew.-%Alkoxylate A1, in denen C₅H₁₁ die Bedeutung n-C₅H₁₁ hat, und
1 bis 30 Gew.-%Alkoxylate A2, in denen C₅H₁₁ die Bedeutung C₂H₅CH(CH₃)CH₂ und/oder CH₃CH(CH₃)CH₂CH₂ hat, im Gemisch vorliegen
Formel (V) R-O-(CₘH₂ₘO)ₓ-(CₙH₂ₙO)_{y}-H (V)
in der
R einen iso-Tridecylrest bezeichnet,
m für die Zahl 2 und gleichzeitig n für die Zahl 3 oder 4 steht oder
m für die Zahl 3 oder 4 und gleichzeitig n für die Zahl 2 steht und
x und y unabhängig voneinander Zahlen von 1 bis 20 bedeuten,
wobei im Fall m = 2/n = 3 oder 4 die Variable x größer oder gleich y ist
oder
Formel (VI) R¹-O-(CH₂-CHR^{II}-O)ₘ(CH₂-CHR^{III}O)ₙ R^{IV} (VI)
in der
R¹ Wasserstoff oder C₁-C₂₀-Alkyl,
R^{II} und R^{III} gleich oder verschieden und jeweils unabhängig voneinander Wasserstoff, Methyl oder Ethyl und
R^{IV} C₁-C₁₀-Alkyl, vorzugsweise C₁-C₄-Alkyl, Cyclohexyl oder Phenyl bedeuten und
m' und n' gleich oder verschieden und größer oder gleich 0 sind,
mit der Maßgabe, dass die Summe von m' und n' 3 bis 300 beträgt oder N-Alkylclucamide der allgemeinen Strukturen (IX) und (X) 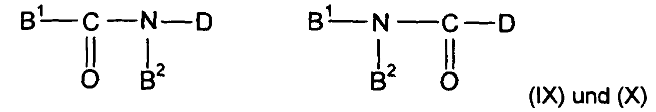 wobei B¹ ein C₆- bis C₂₂-Alkyl, vorzugsweise ein C₁₀- bis C₁₈-Alkyl, B² Wasserstoff oder C₁-bis C4-Alkyl, vorzugsweise CH₃, und D ein Polyhydroxyalkyl-Rest mit 5 bis 12 C-Atomen, vorzugsweise ein C₅- oder C₆- Rest, und mindestens 3 Hydroxygruppen ist.
oder
endgruppenverschlossene Fettsäureamidalkoxylate der Formel (XI)
R¹-CO-NH- (CH₂)_{y}-O- (A¹O)ₓ-R² (XI)
in der
R¹ einen C₅- bis C₂₁-Alkyl- oder Alkenylrest bezeichnet,
R² eine C₁- bis C₄-Alkylgruppe bedeutet,
A¹ für C₂- bis C₄-Alkylen steht,
y die Zahl 2 oder 3 bezeichnet und
x einen Wert von 1 bis 6 hat oder
ein amphoteres Tensid ausgewählt aus der Gruppe der Tenside, enthaltend Carbonsäuren sowie weiterhin mindestens eine ethylenisch ungesättigte Monomereinheit der allgemeinen Formel (XII)
R¹(R²)C=C(R³)R⁴ (XII),
in der R¹ bis R⁴ unabhängig voneinander für -H, -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder -COOH substituierte Alkyl- oder Alkenylreste wie vorstehend definiert, eine heteroatomare Gruppe mit mindestens einer positiv geladenen Gruppe, einem quaternisierten Stickstoffatom oder zumindest einer Amingruppe mit einer postiven Ladung im pH-Bereich zwischen 2 und 11 oder für -COOH oder -COOR⁵ steht, wobei R⁵ ein gesättigter oder ungesättigter, geradkettigter oder verzweigter Kohlenwasserstoffrest mit 1 bis 12 Kohlenstoffatomen ist,
(1c) Inkontaktbringen des metallhaltigen Materials mit der Zusammensetzung, wobei eine mit Metall angereicherte Mutterlauge erhalten wird, **dadurch gekennzeichnet,**
**dass** das Tensid in einer Konzentration von 0, 1 bis 0,3 Gew.-% in einer 2%igen wässrigen H₂SO₄-Lösung bei 23 °C zu einer Erniedrigung des Kontaktwinkels auf Glas nach 1 Sekunde um mindestens 10 ° führt, wobei die Zusammensetzung einen Kontaktwinkel auf Glas von kleiner 40 ° aufweist.

2. Verfahren nach Anspruch 1, **dadurch gekennzeichnet, dass** das Verfahren zur Gewinnung von Kupfer dient.

3. Verfahren nach wenigstens einem der vorhergehenden Ansprüche , **dadurch gekennzeichnet, dass** aus der erhaltenen wässrigen Mutterlauge das Kupfer durch Extraktion mit einem organisch löslichen Komplexbildner in eine organische Phase überführt wird, im Anschluss das Kupfer aus der organischen Lösung durch Schwefelsäure in eine wässrige Phase überführt und hieraus auf elektrochemischem Weg gewonnen wird.

4. Verfahren nach wenigstens einem der vorhergehenden Ansprüche, **dadurch gekennzeichnet, dass** als Tensid ein endgruppenverschlossenes Alkoholalkoxylat der Formeln (I), (II), (III), (V) verwendet wird, wobei der Endgruppenverschluss mit Dialkylsulfat, C₁-C₁₀-Alkylhalogenid oder Vinylhalogenid erfolgt.

## Claims

1. A process for extracting metal from metal-containing materials, comprising the following process steps:
(1a) provision of an optionally milled metal-containing material,
(1b) provision of an aqueous composition which comprises sulfuric acid and at least one surfactant according to at least one of the following formulae:
formula (I) R¹-O-(CH₂-CHR⁵-O-)ᵣ(CH₂-CH₂-O-)ₙ(CH₂-CHR⁶-O-)ₛ(CH₂- CHR²-O-)ₘH (I)
where
R¹ is at least singly branched C₄₋₂₂-alkyl or -alkylphenol,
R² is C₃₋₄-alkyl
R⁵ is C₁₋₄-alkyl
R⁶ is methyl or ethyl
n has a mean value of from 1 to 50
m has a mean value of from 0 to 20, preferably from 0.5 to 20
r has a mean value of from 0 to 50
s has a mean value of from 0 to 50,
m being at least 0.5 if R⁵ is methyl or ethyl or r has the value 0 or
formula (II) R³-O-(CH₂-CH₂-O-)ₚ(CH₂-CHR⁴-O-)_{q}H (II)
where
R³ is branched or straight-chain C₄₋₂₂-alkyl or -alkylphenol
R⁴ is C₃₋₄-alkyl
p has a mean value of from 1 to 50, preferably from 4 to 15
q has a mean value of from 0.5 to 20, preferably from 0.5 to 4, more preferably from 0.5 to 2 or alkoxylate mixtures comprising alkoxylates of the formula (III)
C₅H₁₁CH(C₃H₇)CH₂O(B)ₚ(A)ₙ(B)ₘ(A)_{q}H (III)
where
A is ethyleneoxy
B, in each case independently, is C₃₋₁₀-alkyleneoxy, preferably propyleneoxy, butyleneoxy, pentyleneoxy or mixtures thereof,
groups A and B being present in the form of blocks in the stated sequence,
p is a number from 0 to 10,
n is a number greater than 0 to 20,
m is a number greater than 0 to 20,
q is a number greater than 0 to 10,
p + n + m + q is at least 1,
from 70 to 99% by weight of alkoxylates A1 in which C₅H₁₁ has the meaning n-C₅H₁₁ and
from 1 to 30% by weight of alkoxylates A2 in which C₅H₁₁ has the meaning C₂H₅CH(CH₃)CH₂ and/or CH₃CH(CH₃)CH₂CH₂ being present in the mixture
formula (V) R-O-(CₘH₂ₘO)ₓ-(CₙH₂ₙO)_{y}-H (V)
where
R is an isotridecyl radical,
m is the number 2 and at the same time n is the number 3 or 4 or
m is the number 3 or 4 and at the same time n is the number 2 and
x and y, independently of one another, are numbers from 1 to 20,
the variable x being greater than or equal to y where m = 2/n = 3 or 4
or
formula (VI) R^{I}-O- (CH₂-CHR^{II}-O)ₘ(CH₂-CHR^{III})ₙ,R^{IV} (VI)
where
R^{I} is hydrogen or C₁-C20-alkyl,
R^{II} and R^{III} are identical or different and, in each case independently of one another, are hydrogen, methyl or ethyl and
R^{IV} is C₁-C₁₀-alkyl, preferably C₁-C₄-alkyl, cyclohexyl or phenyl and
m' and n' are identical or different and are greater than or equal to 0,
with the proviso that the sum of m' and n' is from 3 to 300 or
N-alkylglucamides of the general structures (IX) and (X) 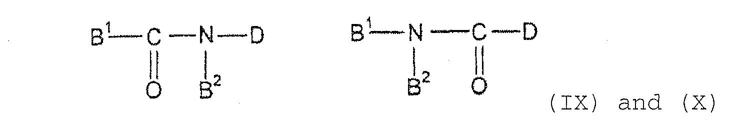 in which B¹ is a C₆- to C₂₂-alkyl, preferably a C₁₀-to C₁₈-alkyl, B² is hydrogen or C₁- to C₄-alkyl, preferably CH₃, and D is a polyhydroxyalkyl radical having 5 to 12 carbon atoms, preferably a C₅- or C₆-radical, and at least 3 hydroxyl groups,
or
endcapped fatty acid amide alkoxylates of the formula (XI)
R^{I}-CO-NH-(CH₂)_{y}-O-(A¹O)ₓ-R² (XI)
in which
R^{I} is a C₅- to C₂₁-alkyl or alkenyl radical,
R² is a C₁- to C₄-alkyl group,
A¹ is C₂- to C₄-alkylene,
y is the number 2 or 3 and
x has a value of from 1 to 6, or
an amphoteric surfactant selected from the group consisting of surfactants comprising carboxylic acids and furthermore at least one ethylenically unsaturated monomer unit of the general formula (XII)
R¹(R²) C=C(R³) R⁴ (XII)
where R¹ to R⁴, independently of one another, are - H, -CH₃, a straight-chain or branched saturated alkyl radical having 2 to 12 carbon atoms, a straight-chain or branched, mono- or polyunsaturated alkenyl radical having 2 to 12 carbon atoms, alkyl or alkenyl radicals as defined above and substituted by -NH₂, -OH or -COOH, a heteroatomic group having at least one positively charged group, a quaternized nitrogen atom or at least one amino group having a positive charge in the pH range from 2 to 11, or is -COOH or -COOR⁵, where R⁵ is a saturated or unsaturated, straight-chain or branched hydrocarbon radical having 1 to 12 carbon atoms,
(1c) bringing of the metal-containing material into contact with the composition, a mother liquor enriched with metal being obtained,
wherein the surfactant, in a concentration of from 0.1 to 0.3% by weight in a 2% strength aqueous H₂SO₄ solution, at 23°C, leads to a reduction in the contact angle on glass after 1 second by at least 10°, the composition having a contact angle on glass of less than 40°.

2. The process according to claim 1, which serves for the extracting of copper.

3. The process according to at least one of the preceding claims, wherein the copper is transferred from the resulting aqueous mother liquor into an organic phase by extraction with a complexing agent soluble in an organic medium, and the copper is then transferred from the organic solution by means of sulfuric acid into an aqueous phase and is obtained therefrom by an electrochemical method.

4. The process according to at least one of the preceding claims, wherein the surfactant used is an endcapped alcohol alkoxylate of the formulae (I), (II), (III), (V), the endcapping being effected with dialkyl sulfate, C₁-C₁₀-alkyl halide or vinyl halide.

## Revendications

1. Procédé pour l'extraction de métal de matériaux contenant un métal, comprenant les étapes de procédé suivantes :
(1a) préparation d'un matériau contenant un métal le cas échéant broyé,
(2a) préparation d'une composition aqueuse qui contient de l'acide sulfurique et au moins un agent tensioactif selon au moins l'une quelconque des formules suivantes
Formule (I) R¹-O-(CH₂-CHR⁵-O-)ᵣ(CH₂-CH₂-O-)ₙ(CH₂-CHR⁶-O-)ₛ(CH₂-CHR²-O-)ₘH (I)
où
R¹ signifie C₄₋₂₂-alkyle au moins mono ramifié ou C₄₋₂₂- alkylphénol,
R² signifie C₃₋₄-alkyle
R⁵ signifie C₁₋₄-alkyle
R⁶ signifie méthyle ou éthyle
n vaut une valeur moyenne de 1 à 50,
m vaut une valeur moyenne de 0 à 20, de préférence de 0,5 à 20
r vaut une valeur moyenne de 0 à 50
s vaut une valeur moyenne de 0 à 50
où m vaut au moins 0,5 lorsque R⁵ signifie méthyle ou éthyle ou r vaut 0 ou
Formule (II) R³-O-(CH₂-CH₂-O)ₚ(CH₂-CHR⁴-O-)_{q}H (II)
où
R³ signifie C₄₋₂₂-alkyle ramifié ou non ramifié ou C₄₋₂₂-alkylphénol,
R⁴ signifie C₃₋₄-alkyle
p vaut une valeur moyenne de 1 à 50, de préférence de 4 à 15
q vaut une valeur moyenne de 0,5 à 20, de préférence de 0,5 à 4, plus préférablement de 0,5 à 2,
ou des mélanges d'alcoolates, contenant des alcoolates de formule (III)
C₅H₁₁CH(C₃H₇)CH₂O(B)ₚ(A)ₙ(B)ₘ(A)_{q}H (III)
où
A signifie éthylénoxy
B signifie, à chaque fois indépendamment, C₃₋₁₀-alkylénoxy, de préférence propylénoxy, butylénoxy, pentylénoxy ou leurs mélanges, où les groupes A et B se trouvent sous forme de blocs dans l'ordre indiqué,
p vaut un nombre de 0 à 10,
n vaut un nombre supérieur à 0 jusqu'à 20,
m vaut un nombre supérieur à 0 jusqu'à 20,
q vaut un nombre supérieur à 0 jusqu'à 10,
p + n + m + q vaut au moins 1,
où
- 70 à 99% en poids d'alcoxylates A1, dans lesquels C₅H₁₁ signifie n-C₅H₁₁, et
- 1 à 30% en poids d'alcoxylates A2, dans lesquels C₅H₁₁ signifie C₂H₅CH(CH₃)CH₂ et/ou CH₃CH (CH₃) CH₂CH₂, se trouvent en mélange Formule (V)
R-O- (Cₘ-H₂ₘO)ₓ- (CₙH₂ₙO)_{y}-H (V)
dans laquelle
R signifie un radical isotridécyle,
m représente le nombre 2 et n représente simultanément le nombre 3 ou 4 ou m représente le nombre 3 ou 4 et n représente simultanément le nombre 2 et x et y signifient indépendamment l'un de l'autre des nombres de 1 à 20,
où, dans le cas où m = 2/n = 3 ou 4, la variable x est supérieure ou égale à y
ou
Formule (VI) R^{I}-O- (CH₂-CHR^{II}-O)ₘ(CH₂-CHR^{III}O)ₙR^{IV} (VI)
dans laquelle
R^{I} représente hydrogène ou C₁-C₂₀-alkyle
R^{II} et R^{III} sont identiques ou différents et signifient à chaque fois indépendamment l'un de l'autre hydrogène, méthyle ou éthyle et
R^{IV} signifie C₁-C₁₀-alkyle, de préférence C₁-C₄-alkyle, cyclohexyle ou phényle et
m' et n' sont identiques ou différents et sont supérieurs ou égaux à 0,
à condition que la somme de m' et n' vaille 3 à 300 ou des N-alkylglucamides des structures générales (IX) et (X) 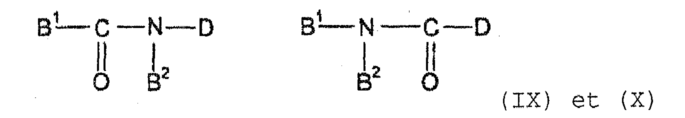 où B¹ représente un radical C₆-C₂₂-alkyle, de préférence un radical C₁₀-C₁₈-alkyle, B² représente hydrogène ou un radical C₁-C₄-alkyle, de préférence CH₃, et D représente un radical polyhydroxyalkyle comprenant 5 à 12 atomes de carbone, de préférence un radical en C₅ ou C₆, et au moins 3 groupes hydroxy,
ou des alcoxylates d'amides d'acides gras à groupes terminaux bloqués de formule (XI)
R¹-CO-NH-(CH₂)_{y}-O- (A¹O)ₓ-R² (XI)
dans laquelle
R¹ signifie un radical C₅-C₂₁-alkyle ou alcényle,
R² signifie un groupe C₁-C₄-alkyle,
A¹ représente C₂-C₄-alkylène,
y vaut le nombre 2 ou 3, et
x vaut 1 à 6, ou
un agent tensioactif amphotère choisi dans le groupe des agents tensioactifs contenant des acides carboxyliques ainsi qu'en outre au moins une unité monomère éthyléniquement insaturée de formule générale (XII)
R¹(R²)C=C(R³)R⁴ (XII),
dans laquelle R¹ à R⁴ représentent, indépendamment l'un de l'autre, -H, -CH₃, un radical alkyle saturé linéaire ou ramifié comprenant 2 à 12 atomes de carbone, un radical alcényle linéaire ou ramifié, monoinsaturé ou polyinsaturé comprenant 2 à 12 atomes de carbone, des radicaux alkyle ou alcényle substitués par -NH₂, -OH ou -COOH, tels que définis ci-dessus, un groupe hétéroatomique avec au moins un groupe chargé positivement, un atome d'azote quaternisé ou au moins un groupe amine avec une charge positive dans la plage de pH entre 2 et 11 ou -COOH ou -COOR⁵, où R⁵ représente un radical hydrocarboné saturé ou insaturé, linéaire ou ramifié comprenant 1 à 12 atomes de carbone,
(1c) mise en contact du matériau contenant un métal avec la composition, avec obtention d'une lessive-mère enrichie en métal,
**caractérisé en ce que** l'agent tensioactif en une concentration de 0,1 à 0,3% en poids dans une solution aqueuse à 2% de H₂SO₄ à 23°C conduit à une diminution de l'angle de contact sur du verre après 1 seconde d'au moins 10°, la composition présentant un angle de contact sur du verre inférieur à 40°.

2. Procédé selon la revendication 1, **caractérisé en ce que** le procédé sert à l'extraction de cuivre.

3. Procédé selon au moins l'une quelconque des revendications précédentes, **caractérisé en ce qu'**à partir de la lessive-mère aqueuse obtenue, le cuivre est transféré par extraction avec un complexant organiquement soluble dans une phase organique, puis le cuivre est transféré de la solution organique, par de l'acide sulfurique, dans une phase aqueuse et est extrait de celle-ci par voie électrochimique.

4. Procédé selon au moins l'une quelconque des revendications précédentes, **caractérisé en ce qu'**on utilise comme agent tensioactif un alcoxylate d'alcool à groupes terminaux bloqués des formules (I), (II), (III), (V), où le blocage des groupes terminaux est réalisé avec un dialkylsulfate, un halogénure de C₁-C₁₀-alkyle ou un halogénure de vinyle.
